# EUROPEAN PATENT SPECIFICATION

(11) **EP 1 377 737 B1**
(45) Date of publication and mention of the grant of the patent: **14.09.2005**
(21) Application number: 02720332.2
(22) Date of filing: 04.04.2002
(51) Int. Cl.: F02D 41/38

(54) **FUEL INJECTION CONTROL APPARATUS AND CONTROL METHOD THEREOF**
KRAFTSTOFFEINSPRITZEINRICHTUNG UND STEUERUNGSVERFAHREN HIERFÜR
APPAREIL DE COMMANDE D'INJECTION DE CARBURANT ET SON PROCEDE DE COMMANDE

(30) Priority: 05.04.2001 JP 2001106913
(43) Date of publication of application: 07.01.2004
(73) Proprietor: Toyota Jidosha Kabushiki Kaisha, Toyota-shi, Aichi 471-8571 (JP); DENSO CORPORATION, Aichi-pref. 488-8661 (JP)
(72) Inventor: ITOH, Yoshiyasu, c/o Toyota Jidosha K.K., Toyota-shi, Aichi-ken 471-8571 (JP); SUGIYAMA, Tatsumasa c/o Toyota Jidosha K.K., Toyota-shi, Aichi-ken 471-8571 (JP); MORI, Hiroki, c/o Denso Corporation, Kariya-City, Aichi-Pref 448-8661 (JP)
(74) Representative: TBK-Patent
(86) International application number: PCT/IB2002/001069
(87) International publication number: WO 2002/081891

(56) References cited:
- EP-A- 0 916 831
- US-A- 5 564 391
- PATENT ABSTRACTS OF JAPAN vol. 017, no. 500 (M-1477), 9 September 1993 (1993-09-09) & JP 05 125985 A (NIPPONDENSO CO LTD), 21 May 1993 (1993-05-21) cited in the application
- PATENT ABSTRACTS OF JAPAN vol. 017, no. 465 (M-1468), 25 August 1993 (1993-08-25) & JP 05 106495 A (NIPPONDENSO CO LTD), 27 April 1993 (1993-04-27)

## Description

### FIELD OF THE INVENTION

The invention relates to a fuel injection control apparatus that detects the pressure of fuel delivered from a fuel pump to a fuel injection valve of an engine, and control the amount of fuel injected and the injection pressure based on the detected value of fuel pressure, and a control method thereof.

### BACKGROUND OF THE INVENTION

As well known, in generally termed accumulator type diesel engines and direct injection type gasoline engines, fuel is pressurized and delivered to a common rail (fuel distributing pipe) that distributes fuel to electromagnetic injectors of individual cylinders, and the fuel is injected by opening each injector.

The fuel injection control apparatus of this type of engine first detects the pressure of fuel in the common rail (common rail pressure) as an analog signal through the use of a rail pressure sensor. The fuel injection control apparatus performs the A/D conversion of the common rail pressure as the detected analog signal into a digital signal. Furthermore, the fuel injection control apparatus controls the amount of fuel injected and the injection pressure based on the digital signal-converted common rail pressure. To distinguish the common rail pressure before the A/D conversion and the common rail pressure after the A/D conversion, the latter will be simply referred to as "rail pressure" in this specification. Furthermore, in this specification, the series of processes from the detection of the fuel pressure in the common rail as an analog signal using the rail pressure sensor to the A/D conversion of the analog signal into a digital signal will be referred to as "sampling".

In the control of the amount of fuel injected, a duration of electrification (injection duration) is determined based on the rail pressure and an injection amount instruction value corresponding to the then state of operation of the engine. By electrifying an electromagnetic valve over that duration, the injector is opened to inject an amount of fuel corresponding to the injection amount instruction value.

In the injection pressure control, a target pressure in accordance with the state of operation of the engine is computed, and a pressure control valve is electrified so that the rail pressure converges to the target pressure. This electrification adjusts the amount of fuel delivered (amount of fuel ejected) from a supply pump to the common rail so that the common rail pressure becomes optimal and a fuel pressure needed for the fuel injection from the injector is secured.

A related technology regarding the sampling timing in the fuel injection control apparatus is described in, for example, Japanese Patent No. 3077298. This patent specification proposes that the sampling for computing a rail pressure for the injection amount control and the sampling for computing a rail pressure for the injection pressure control be performed synchronously with fuel injection, that is, the opening of the injector valve.

In some cases, the common rail pressure is changing during fuel delivery and the the controllability may deteriorate.

Furthermore, if an A/D converter that performs the A/D conversion during the sampling is provided separately from an electronic control unit that incorporates a microcomputer for performing the injection amount control and the injection pressure control, time is consumed for the communication between the A/D converter and the microcomputer. The communication time occupies a great proportion of the duration of output of the injector drive signal. Therefore, in order to perform the various operations with reliability, it is necessary to increase the width of the injector drive signal (the output duration) to a certain value. In other words, if the output period of the drive signal is short, it is difficult to perform the various operations within the output period.

Furthermore, there occurs a delay between the start of output of the injector drive signal and the actual opening of the injector valve. This delay time is short in the case of highly responsive injectors. Correspondingly, the timing of stopping the output of the injector drive signal is early. Therefore, if a small amount of fuel is to be injected from a highly responsive injector, there is a danger that the various operations cannot be completed within the output period of the injector drive signal, which is short as mentioned above.

The invention has been accomplished in view of the above-stated circumstances. It is an object of the invention to provide a fuel injection control apparatus capable of improving the controllability of the fuel injection pressure control while maintaining good controllability of the fuel injection amount control. It is another object of the invention to provide a fuel injection control apparatus capable of reliably A/D-converting the common rail pressure sampled synchronously with the infection fuel even if the output period of the injector drive signal is short or a small amount of fuel is to be injected from a highly responsive injector.

### DISCLOSURE OF THE INVENTION

Means for achieving the aforementioned objects and advantages thereof will be described below.

A fuel injection control apparatus of a mode of the invention comprises: sampling means for acquiring a pressure of a fuel delivered to a fuel injection valve as a digital signal; injection amount control means for computing an injection period based on a fuel injection amount in accordance with a state of the engine and the sampled pressure of the fuel, and for controlling the fuel injection valve; and injection pressure control means for controlling the sampled pressure of the fuel so that it converges to a target pressure. In this fuel injection control apparatus, the sampling for computing the pressure of the fuel for the injection amount control and the sampling for computing the pressure of the fuel for the injection pressure control are performed at different timings.

In a control method of the fuel injection control apparatus, a pressure of a fuel delivered to a fuel injection valve is sampled in order to acquire the pressure as a digital signal, and the fuel injection valve is controlled so that the fuel is injected over the injection period determined based on a fuel injection amount in accordance with a state of the engine and the sampled pressure of the fuel, and the pressure of the fuel for an injection pressure control which has been converted into the digital signal is controlled so that it converges to a target pressure. In this control method, the sampling for computing the pressure of the fuel for the injection amount control and the sampling for computing the pressure of the fuel for the injection pressure control are performed at different timings.

The adoption of the construction and the control method described above makes it possible to perform the injection amount control-purposed sampling and the injection pressure control-purposed sampling at their respective optimal timings. As a result, it becomes possible to improve the controllability of the fuel injection pressure control while maintaining good controllability of the fuel injection amount control.

### BRIEF DESCRIPTION OF THE DRAWINGS

The present invention will next be described with reference to the following drawings.
FIG. 1 is a schematic diagram illustrating a construction of an embodiment in which the fuel injection control apparatus of the invention is embodied in a pressure accumulator type diesel engine.
FIG. 2 is a flowchart illustrating a procedure of computing an injection end- time.
FIG. 3 is a schematic diagram illustrating a map arrangement of a control map for use in computation of an injection period.
FIG. 4 is a flowchart illustrating a procedure of computing a rail pressure for an injection pressure control.
FIG. 5 is a flowchart illustrating a procedure of controlling a supply pump in the injection pressure control.
FIG. 6 is a timing chart indicating a specific mode of a sampling process performed by the fuel injection control apparatus.

### DETAILED DESCRIPTION OF THE PREFERRED EMBODIMENTS

An embodiment, that is, a mode of the fuel injection control apparatus of the invention, will be described below with reference to the drawings.

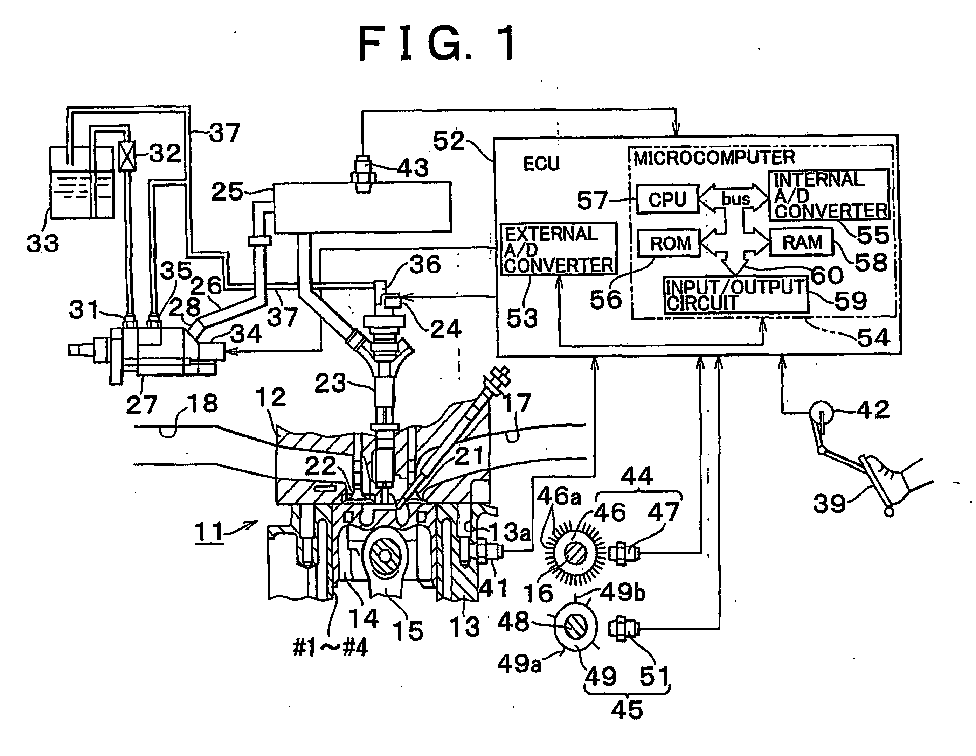

A vehicle is equipped with a pressure accumulator type diesel engine (hereinafter, simply referred to as "engine") 11 as shown in FIG. 1. The engine 11 has a cylinder head 12 and a cylinder block 13 that has a plurality of cylinders (e.g., four cylinders #1, #2, #3, #4). A piston 14 is disposed within each cylinder #1 to #4 for reciprocating movements. The pistons 14 are connected to a crankshaft 14 that is an output shaft of the engine 11, via connecting rods 15. Reciprocating movements of the pistons 14 are converted into rotational movements via the connecting rods 15, and are transferred to the crankshaft 16. In FIG. 1, the crankshaft 16 is shown apart from the cylinder block 13 for convenience in illustration.

An intake passage 17 is connected to a combustion chamber of each cylinder #1 to #4, so that air is introduced from outside the engine 11 into each combustion chamber via the intake passage 17. An exhaust passage 18 is also connected to each combustion chamber. The cylinder head 12 is provided with a camshaft 48 and intake valves 21 and exhaust valves 22 of the cylinders #1 to #4. The camshaft 48 is drivingly connected to the crankshaft 16 via a belt, a chain or the like as well known. The camshaft 48 undergoes one rotation during every two rotations of the crankshaft 16. The intake and exhaust valves 21, 22 are driven back and forth by cams (not shown) provided on the camshaft 48, so as to open and close connecting portions between the intake and exhaust passages 17, 18 and the combustion chambers. In FIG. 1, the camshaft 48 is shown apart from the cylinder head 12 for the sake of convenient in illustration.

The cylinder head 12 is provided with electromagnetic fuel injection valves (injectors) 23 that inject fuel into the combustion chambers of the cylinders #1 to #4. The fuel injection from each injector 23 into the combustion chamber is controlled by an electromagnetic valve 24. Fashions of fuel injection include "main injection" of injecting a main amount of fuel for production of engine output, and "pilot injection" of injecting a small amount of fuel prior to the main injection, for the purpose of improving ignitability.

The injectors 23 are connected to a common rail 25 that is a fuel distributing pipe. While the electromagnetic valve 24 is open, fuel from the common rail 25 is injected from the corresponding injector 23 into the combustion chamber. A relatively high pressure corresponding to the fuel injection pressure is accumulated in the common rail 25. In order to realize this pressure accumulation, the common rail 25 is connected to an ejection port 28 of a supply pump 27 via a supply pipe 26.

An intake port 31 of the supply pump 27 is connected to a fuel tank 33 via a filter 32. Fuel is drawn from the fuel tank 33 into the supply pump 27 via the filter 32. The supply pump 27 has a cam (not shown) that is moved synchronously with the rotation of the crankshaft 16, and a pair of plungers (not shown) that are moved back and forth by the cam. The supply pump 27 pressurizes fuel within a pressurizing chamber (not shown) by the reciprocating movements of the plungers, and ejects fuel from the ejection port 28, and delivers fuel to the common rail 25 via the supply pipe 26. The pressure of fuel ejected from the supply pump 27, that is, the amount of fuel ejected therefrom (amount of fuel delivered), is adjusted by opening and closing a pressure control valve 34 provided near the ejection port 28.

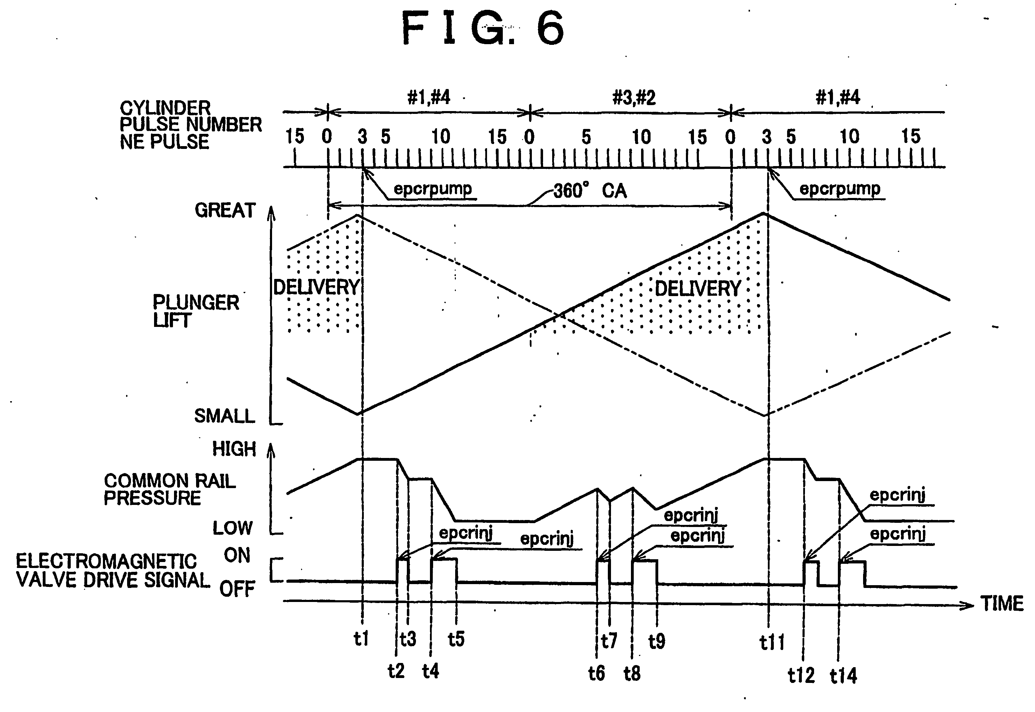

The delivery of fuel toward the cylinders caused by lifting movements of the two plungers is performed alternately with a phase difference of 360°CA in crank angle (CA being an abbreviation of crank angle) (see FIG. 6).

A return port 35 of the supply pump 27 and a return port 36 of the electromagnetic valve 24 are connected to the fuel tank 33 via return pipes 37. Surplus amounts of fuel from the supply pump 27 and the injectors 23 are returned to the fuel tank 33 via the return pipes 37.

Fuel is injected from the injectors 23 into the high-temperature and high-pressure intake air which has been introduced into the cylinders #1 to #4 via the intake passages 17 and has been compressed by the pistons 14. The injected fuel is self-ignited, and burns to produce combustion gas, whereby the pistons 14 are moved back and forth and therefore the crankshaft 16 is rotated. In this manner, the engine 11 produces drive force (output torque). Combustion gas is discharged out of the engine 11 via the exhaust-passage 18.

Various sensors, including a water temperature sensor 41, an accelerator sensor 42, a rail pressure sensor 43, a rotational angle sensor 44, a cylinder discrimination sensor 45, etc., are used to detect the state of operation of the engine 11. The water temperature sensor 41 is provided in the cylinder block 13 for detecting the temperature of cooling water that flows in a water-jacket 13a. The accelerator sensor 42 detects the accelerator operation amount, that is, the amount of depression of an accelerator pedal 39 caused by a driver. The rail pressure sensor 43 is provided in the common rail 25 for detecting the common rail pressure, that is, the pressure of fuel accumulated in the common rail 25.

The rotational angle sensor 44 is formed by, for example, a rotor 46 attached to the crankshaft 16 and an electromagnetic pickup 47 disposed near the rotor 46. Many protrusions 46a are equiangularly formed on substantially the entire outer periphery of the rotor 46. The rotor 46 has a depleted portion where two protrusions 46a are absent. Therefore, in the depleted portion, the interval between the adjacent protrusions 46a is greater than in the other portions of the rotor 46. The electromagnetic pickup 47 outputs a pulse signal (NE pulse) every time a protrusion 46a of the rotor 46 passes by the electromagnetic pickup 47 during rotation of the rotor 46 along with rotation of the crankshaft 16. In this embodiment, the electromagnetic pickup 47 outputs 34 pulse signals during every single rotation of the crankshaft 16 (see FIG. 6).

In this embodiment, pulse signals are serially numbered, and therefore are identified. More specifically, with reference to the time when the protrusion-depleted portion passes by the electromagnetic pickup 47, the pulse signal corresponding to the immediately subsequent protrusion 46a is numbered as "0" as indicated in FIG. 6. Until the rotor 46 undergoes a half rotation, the pulse number increments by one every time a pulse signal is output. Subsequently to the half rotation of the rotor 46, the pulse number returns to "0". The pulse number then increments by one at every pulse signal output until the protrusion-depleted portion passes by the electromagnetic pickup 47. This operation can be realized through the use of a counter that counts pulse signals and sequentially stores value "0" to "16" corresponding to the protrusions 46a of the rotational angle sensor 44.

As shown in FIG. 1, the cylinder discrimination sensor 45 is formed by, for example, a rotor 49 attached to the camshaft 48 and an electromagnetic pickup 51 disposed near the rotor 49. A plurality of protrusions 49a are equiangularly formed on an outer periphery of the rotor 49, and another protrusion 49b is formed near a predetermined one of the protrusions 49a. The electromagnetic pickup 51 outputs a pulse signal every time a protrusion 49a, 49b of the rotor 49 passes by the electromagnetic pickup 51 as the rotor 49 rotates along with rotations of the camshaft 48. In this embodiment, the cylinder discrimination sensor 45 outputs five pulse signals during every one rotation of the camshaft 48, that is, during every two rotations of the crankshaft 16.

The pulse signals output from the rotational angle sensor 44 and the cylinder discrimination sensor 45 are used to compute the crank angle (°CA), and to compute the engine rotational speed, and to compute the top dead center of the piston 14 in each cylinder #1 to #4 (discriminate the cylinders). For example, the engine rotational speed, that is, the number of rotations of the crankshaft 16 per unit time, is determined based on the number of pulse signals output from the rotational angle sensor 44 per unit time.

The vehicle is equipped with an electronic control unit (ECU) 52 for controlling various actuators of the engine, for example, the pressure control valve 34 of the supply pump 27, the electromagnetic valves 24 of each injector 23, etc., based on the detected values provided by the sensors 41 to 45. The ECU 52 includes an external analog/digital (A/D) converter 53 and a microcomputer 54. The external A/D converter 53 and the microcomputer 54 are interconnected for serial communication. The external A/D converter 53 performs digital signal conversion of analog signals from sensors among the sensors 41 to 45 that output detected values in analog signals, for example, the rail pressure sensor 43, the water temperature sensor 41, etc.

The microcomputer 54, forming a central component of the ECU 52, includes an internal A/D converter 55, a read- only memory (ROM) 56, a central processing unit (CPU) 57, a random access memory (RAM) 58, an input/output circuit 59, and a bus 60 that interconnects these components 55 to 59. The internal A/D converter 55 performs digital signal conversion of analog signals from sensors that require high-speed communication with the CPU 57 (the rail pressure sensor 43 in this embodiment), among the sensors 41-45 that outputs detected values in analog signals.

Control programs and initial data are pre-stored in the ROM 56. In accordance with the control programs and initial data stored in the ROM 56, the CPU 57 executes various operations, and controls, for example, the amount of fuel injected and the injection pressure. Furthermore, the CPU 57 outputs, to the internal A/D converter 55 and the external A/D converter 53, commands to A/D-convert actually measured values provided by the rail pressure sensor 43 and the like, and inputs the value of rail pressure after the A/D conversion. The RAM 58 temporarily stores results of operation executed by the CPU 57. The input/output circuit 59 controls the transmission and reception between the CPU 57 and the sensors 41 to 45 as well as the external A/D converter 53 and the actuators.

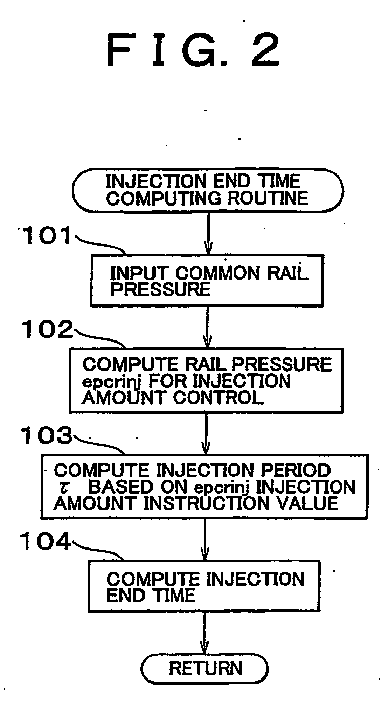

A fuel injection amount control routine executed by the ECU 52 will next be described. FIG. 2 illustrates a routine for computing an injection end time in the injection amount control routine. The injection end time computing routine is executed every time a drive signal for opening an injector is output to the electromagnetic valve 24, that is, the routine is executed synchronously with the injection start timing. The injection start timing is determined in a separately arranged routine by converting a fuel injection timing computed based on states of operation of the engine, for example, the engine rotational speed provided by the rotational angle sensor 44, the accelerator operation amount provided by the accelerator sensor 42, etc., into time through the use of NE pulses.

In S101, the ECU 52 inputs a common rail pressure, that is, an analog signal detected by the rail pressure sensor 43. Subsequently in S102, the ECU 52 computes an injection amount control-purposed rail pressure epcrinj by converting the common rail pressure into a digital signal. Specifically, in the microcomputer 54 in the ECU 52, an A/D conversion command is output from the CPU 57 to the internal A/D converter 55. In response to the command, the internal A/D converter 55 converts the common rail pressure into a digital signal. The converted value is input as a rail pressure epcrinj to the CPU 57. The processes of S101 and S102 correspond to the sampling.

In S103, a fuel injection period τ is calculated based on an injection amount instruction value and the rail pressure epcrinj. The injection amount instruction value is a value computed based on the state of operation of the engine 11 in a separately arranged injection amount computing routine. In the injection amount computing routine, a predetermined control map prescribing the basic injection amount based on the engine rotational speed and the accelerator operation amount is referred to, and a basic infection amount (basic injection duration) corresponding to the then-occurring engine rotational speed and the then-occurring accelerator operation amount is determined. The fuel injection period τ, that means the injection end time, is corrected based on the cooling water temperature of the engine 11. Strictly speaking, the basic injection amount is corrected based on the cooling water temperature and the like, so that an injection amount instruction value is determined.

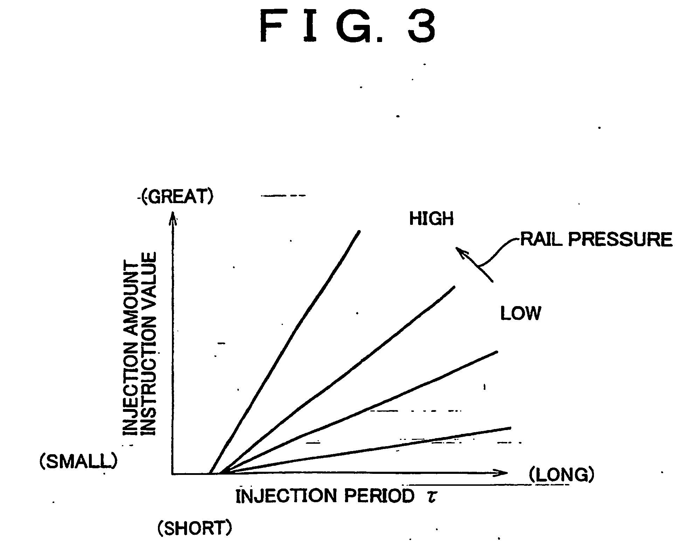

A fuel injection period τ is computed by, for example, referring to a control map prescribing the fuel injection period T based on the injection amount instruction value and the rail pressure as indicated in FIG. 3. In this control map, the fuel injection period τ decreases with increases in the rail pressure provided that the injection amount instruction value is fixed. If the rail pressure is fixed, the fuel injection period τ increases with increases in the injection amount instruction value. In S103, a fuel injection period τ corresponding to the injection amount instruction value and the rail pressure epcrinj is read from the control map.

Subsequently in S104, an injection end time point, that is, a time point that is reached at the elapse of the fuel injection period τ following the injection start time point, is computed based on the time point of outputting the drive signal for opening the injector 23 and the fuel injection period τ. After that, this computation routine is ended. Thus, the sampling for computing the injection amount control-purposed rail pressure epcrinj is performed synchronously with the fuel injection start timing.

The thus-computed injection end time point is used as an electrification (excitation) end time point during an electrification control of the electromagnetic valve 24 in a different routine. When the electrification end time point is reached, the electrification of the electromagnetic valve 24 is stopped, so that the fuel injection from the injector 23 stops. Thus, the injector 23 is opened over the fuel injection period τ, so that a desired amount of fuel is injected into the combustion chamber.

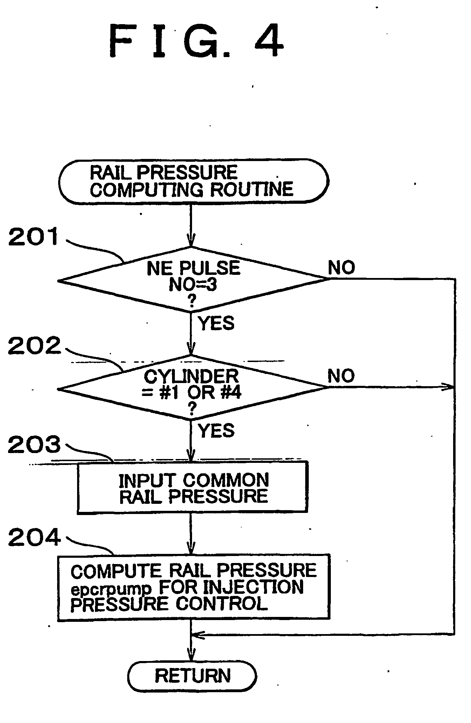

Next described will be an injection pressure control routine executed by the ECU 52. FIG. 4 illustrates a routine for computing an injection pressure control-purposed rail pressure epcrpump in the injection pressure control routine.

The ECU 52 determines whether the present time is a timing when the rail pressure epcrpump should be computed in S201 and S202. In S201, it is determined whether the pulse number of the pulse signal (NE pulse) output from the rotational angle sensor 44 is a predetermined value α. The predetermined value α is the serial number of the pulse signal that is output immediately after the end of the fuel delivery by one of the plungers of the supply pump 27, that is, when-the common rail pressure stops rising and becomes stable at a substantially constant_value. In this embodiment, the predetermined value α is set at "3". In S202, it is determined whether a cylinder whose fuel delivery end timing is about to come (cylinder #1 or #4 in this case) based on the pulse signal output from the cylinder discrimination sensor 45. The aforementioned pulse number ("3") in S201 and the aforementioned cylinder ("#1" or "#4") are mere examples, and may be suitably changed in accordance with the kind of the engine 11.

If the determination conditions in S201 and S202 are both met, the common rail pressure that is an analog signal detected by the rail pressure sensor 43 is input in S203. In S204, a rail pressure epcrpump is computed through conversion of the common rail pressure into a digital signal. Specifically, the microcomputer 54 in the ECU 52 outputs an A/D conversion command to the external A/D converter 53. In response to the command, the external A/D converter 53 converts the common rail pressure into a digital signal. Then, the converted value is input as a rail pressure epcrpump to the- microcomputer 54. After the rail pressure epcrpump is computed, this computing routine is ended. The processes of S203, S204 correspond to the sampling.

If the determination condition in S201 is not met, or if the determination condition in S202 is not met although the determination condition in S201 is met, this computing routine is ended without execution of the processes of S203, S204. Thus, in the rail pressure computing routine, the sampling for computing the rail pressure epcrpump is executed synchronously with a predetermined pulse signal.

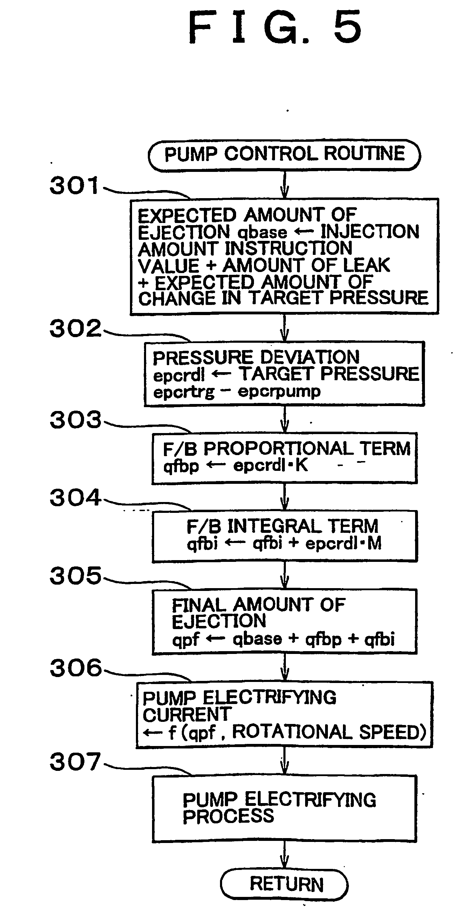

FIG. 5 illustrates a routine for controlling the pressure control valve 34 of the supply pump 27 through the use of the rail pressure epcrpump in the injection pressure control routine.

First in S301, the ECU 52 adds an amount of leak and an expected amount of change in the target pressure to the injection amount instruction value, and sets the result of addition as an expected amount of ejection qbase of the supply pump 27. The injection amount instruction value is the same value as that used in S103 in the injection end time computing routine, and the amount of leak is the amount of fuel that leaks from the injector 23 and the like. The value obtained by adding the amount of leak to the injection amount instruction value is the amount of fuel needed to maintain a predetermined value of the common rail pressure. The expected amount of change in the target pressure is an expected amount of fuel needed to bring the common rail pressure to a target pressure epcrtrg that is a target value of the common rail pressure in accordance with the state of operation of the engine 11 if the target pressure epcrtrg changes.

Subsequently in S302, the rail pressure epcrpump determined in the rail pressure calculating routine is subtracted from the target pressure epcrtrg, and the result of subtraction is set as a pressure deviation epcrd1. A feedback proportional term qfbp and a feedback integral term qfbi are determined in S303 and S304 based on the pressure deviation epcrdl. Specifically, in S303, the pressure deviation epcrdl is multiplied by a predetermined factor K, and the result of multiplication is set as a feedback proportional term qfbp. In S304, the product of the pressure deviation epcrdl and a predetermined factor M is added to the feedback integral term qfbi obtained in the previous cycle of the control, and the result of addition is set as a new feedback integral term qfbi.

In S305, the feedback proportional term qfbp and the feedback integral term qfbi are added to the expected amount of ejection qbase, and the result of addition is set as a final amount of ejection qpf. In S306, a pump electrifying current is determined in accordance with a predetermined control map or a predetermined operation expression based on the final amount of ejection qpf and the engine rotational speed. In S307, the pressure control valve 34 of the supply pump 27 is electrified and controlled by the aforementioned pump electrifying current. Then, the control routine ends. In this manner, in the pump control routine, the supply pump 27 is controlled so that the rail pressure epcrpump converges to the target pressure epcrtrg in accordance with the state of operation of the engine 11.

FIG. 6 indicates changes in the NE pulses, the amount of lift of the plungers, the common rail pressure, the drive signal to the electromagnetic valve 24, etc., which occur when various processes are performed in accordance with the injection amount control routine and the injection pressure control routine described above. Dotted regions in the diagram indicate that the fuel is delivered by the supply pump 27.

If the injection-object cylinder is the cylinder #1 or #4, the lift of one of plungers (a two-dot line in FIG. 6) increases so that fuel is delivered to the common rail 25 as the crankshaft 16 rotates. The lift of the other plunger (a solid line in FIG. 6) decreases. Due to aforementioned fuel delivery, the common rail pressure rises as time passes. Then, the lift of the one plunger stops increasing and the fuel delivery ends, and then the lift of the plunger enters a decreasing phase from the increasing phase. The lift of the other plunger stops decreasing, and starts decreasing. The common rail pressure assumes a substantially constant value. Thus, at a timing t1 (pulse number = "3") when the common rail pressure starts to stabilize, the common rail pressure for computing the rail pressure epcrpump is sampled.

At a timing t2, the output of a pilot injection-purposed drive signal is started (drive signal turned on), and the injector 23 is opened to start injecting fuel. At the timing t2, the common rail pressure is sampled to compute the rail pressure epcrinj. The sampled rail pressure epcrinj is used in the calculation of the pilot injection-purposed injection period τ1. Since the delivery of fuel has ended, the common rail pressure drops due to the pilot injection. At a timing t3, the output of the drive signal is stopped (drive signal being off), so that the pilot injection ends. Since the delivery of fuel is still not performed, the common rail pressure remains at a substantially constant value following the timing t3.

Subsequently to the pilot injection, the output of a main injection drive signal is started at a timing t4, so that the injector 23 is opened to start injecting fuel as in the case of the timing t2 to t3. At the timing t4, the common rail pressure is sampled for computing the rail pressure epcrinj.

The sampled rail pressure epcrinj is used in computation of a main injection-purposed injection period τ 2. Since the delivery of fuel is not performed, the common rail pressure further decreases due to the main injection after the timing t4. At the timing t5, the output of the drive signal stops, so that the main injection ends. After the timing t5, the common rail pressure assumes a substantially constant value.

After fuel injected into the cylinder #1 or #4, the injection-object cylinder is changed to the cylinder #3 or #2. In this case, the lift of the other plunger (the solid line in EIG. 6) increases to deliver fuel to the common rail 25 as the crankshaft 16 rotates.- Therefore, the common rail pressure rises as time passes.

At a timing t6 during the course of increase of the common rail pressure, the output of the pilot injection drive signal is started, so that the injector 23 is opened to start injecting fuel. At the timing t6, the common rail pressure is sampled for computing the rail pressure epcrinj. If the computed rail pressure epcrinj is used to calculate the pilot injection-purposed injection period τ, the common rail pressure temporarily drops due to the pilot injection. At a timing t7, the output of the drive signal stops, so that the pilot injection ends. Since the delivery of fuel by the other plunger continues, the common rail pressure rises again after the timing t7.

Subsequently to the pilot injection, at a timing t8, the output of the main injection drive signal is started, so that the injector 23 is opened to start the main injection as in the case of the timings t4 to t5. At the timing t8, the common rail pressure is sampled. The converted rail pressure epcrinj is used to compute a main injection purposed infection period τ2. In this case, the common rail pressure temporarily drops due to the main injection. However, since the delivery of fuel continues, the common rail pressure rises again after a timing t9 when the output of the drive signal is stopped.

After fuel injected into the cylinder #3 or #2 as described above, the injection-object cylinder is changed to the cylinder #1 or #4. At a timing t11, the rail pressure epcrpump is determined by sampling the common rail pressure detected by the rail pressure sensor 43 as in the case of the timing t1. At a timing t12 when the output of the pilot injection-purposed drive signal starts, the rail pressure epcrinj is determined by sampling as in the case of the timings t2, t6. At a timing t14 when the output of the main injection-purposed drive signal starts, the rail pressure epcrinj is determined by sampling as in the case of the timings t4, t8.

The above-described embodiment achieves advantages as follows.
(1) In this embodiment, the sampling for computing the rail pressure epcrpump is performed at a timing different from the timing of sampling for computing the rail pressure epcrinj. Therefore, the timing optimal for sampling the common rail pressure in.view of improvement of the controllability differs between the injection amount control and the injection pressure control. Hence, it becomes possible to perform one of the sampling operations at an optimal timing for each control separately from the other sampling operation. As a result, as good controllability as in the related art can be maintained with regard to the fuel injection amount control, and the controllability with regard to the injection pressure control can be improved.
(2) The sampling for computing the rail pressure epcrinj is performed synchronously with the fuel injection caused by opening the injector 23. Therefore, the common rail pressure incessantly changes depending on the timing of fuel delivery by the supply pump 27 and the fuel injection timing (timing advancement and retardation). However, the common rail pressure substantially equal to the actual injection pressure during the injection period can be sampled, so that good controllability in the fuel injection amount control can be maintained.
   The sampling for computing the rail pressure epcrpump is performed synchronously with the rotational angle of the crankshaft 16. Therefore, the common rail pressure changes with the timing of fuel delivery by the supply pump 27, that is, with rotations of the crankshaft 16, and becomes stable at a substantially constant value after the fuel delivery ends. Since the thus-stabilized common rail pressure is sampled, the rail pressure epcrpump can be determined with increased precision and the controllability in the injection pressure control can be improved, in comparison with the case where the sampling is performed synchronously with a different parameter.
(3) The sampling for computing the rail pressure epcrinj is performed substantially simultaneously with the start of output of the drive signal for opening the injector 23. Therefore, since the sampling is performed during an early period of the fuel injection period, the short injection period can be efficiently used and many operations can be reliably executed.
(4) It is conceivable to perform the sampling of the common rail pressure synchronously only with the NE pulses (angle synchronization) as well as in the fashions of the related technologies. In this case, it is required that the sampling be performed when the common rail pressure is stable. In order to meet this requirement, it is necessary to design a supply pump so that the common rail pressure is unlikely to fluctuate. However, such a design will become a complicated structure. Specifically, it is immediately after the end of fuel delivery by a plunger that the common rail pressure becomes stable in the supply pump.
   Therefore, the sampling can be performed only once during one lifting action of the plunger. Hence, in order to perform fuel injections for all the cylinders, it becomes necessary to provide many plungers. Therefore, the number of component parts of the supply pump increases, thus resulting in a complicated structure.
   In contrast, the control apparatus of the embodiment performs the sampling synchronous with NE pluses and also performs the sampling synchronous with fuel injections. Unlike the NE pulse-synchronous sampling, the injection-synchronous sampling makes it possible to carry out stable injection amount control even if the common rail pressure fluctuates due to fuel delivery by the supply pump 27 or the like. During every fuel delivering action of each plunger, the sampling can be performed twice, that is, during the fuel delivery (when the common rail pressure is changing) and immediately after the fuel delivery (when the common rail pressure is stable). As a result, the numbers of various component parts, including plungers, may be small, and the supply pump can be simplified in structure. Thus, cost reductions can be achieved.
(5) In a system where each operation of sampling the common rail pressure is performed synchronously with fuel injection as in a related technology, it is necessary to perform many operations, including the sampling, the calculation of an injection end time, etc., within the inherently short injection period. Therefore, there is substantially no time to perform other operations, such as detection of an abnormality in the rail pressure sensor 43, or the like. Hence, it is difficult to incorporate programs for other operations.
   In the embodiment, in contrast, the sampling for computing the rail pressure epcrpump is performed synchronously with NE pulses. In this case, the restriction that other operations must be performed within such a short period as in the case of the injection-synchronous sampling does not exist. Therefore, it is possible to incorporate programs for various operations, including detection of an abnormality in the rail pressure sensor 43.
(6) Assuming that the common rail pressure sampled synchronously with NE pulses and is used to improve the precision of-the injection amount control, it becomes necessary to provide means for, for example, predicting the common rail pressure at the time of fuel injection. However, if the sampling is performed synchronously with fuel injection as in this embodiment, the aforementioned means is not needed and simple programs suffice.
(7) Since the internal A/D converter 55 provided in the microcomputer 54 is connected to the CPU 57 by the bus 60, communication between the CPU 57 and the internal A/D converter 55 can be performed at high speed. The CPU 57 can input A/D converted data from the internal A/D converter 55 at high speed. Therefore, the time needed for the communication between the internal A/D converter 55 and the CPU 57 can be considerably reduced in comparison with a case where an A/D converter is provided outside the ECU 52, or a case where an A/D converter is provided in the ECU 52 and is connected to the microcomputer 54 for serial communication (which corresponds to the external A/D converter 53).

Specifically, if the sampling for computing, the rail pressure epcrinj is performed synchronously with fuel injection, operations mentioned below are performed during a period from the start of output of a drive signal for opening the injector 23 to the stop of the output. That is, "starting to output the drive signal"→"sampling the common rail pressure"→"computing the time point of closing the valve of the injector 23 (injection end time point) based on the rail pressure epcrinj and the injection amount instruction value"→"stopping the output of the drive signal". Since the communication between the CPU 57 and the internal A/D converter 55 can be performed at high speed, the operation time can be made shorter than the drive time of the injector 23. If a small amount of fuel is injected from a highly responsive injector 23, the period from the start of output of a drive signal to the injector 23 to the actual opening of the injector 23 is short. Even though the output period of the signal is short, it is possible to execute many operations, including the A/D conversion during the sampling, within the period of driving the injector 23 without a problem.

The invention can be carried out in different embodiments as described below.
- In addition to the sampling for computing the rail pressure epcrinj, the sampling for computing the rail pressure epcrpump may also be performed by the internal A/D converter 55. That is, with regard to the injection-synchronous sampling, which has time constraints, it is necessary to use the internal A/D converter 55 in order to minimize the time needed for the A/D conversion. However, with regard to the angle-synchronous sampling, which does not have strict time constraints, the A/D conversion may be performed by using either the external A/D converter 53 or the internal A/D converter 55. It is also possible to provide an A/D converter separately from the ECU 52 and use the A/D converter to perform the A/D conversion during the sampling for computing the rail pressure epcrpump.
- The invention is not limited to diesel engines, but is also applicable to engines designed so as to control the fuel injection amount and the fuel injection pressure based on the fuel pressure, for example, a direct injection type gasoline engine in which fuel is injected directly into the combustion chamber. The invention is also applicable to diesel engines in which the pilot injection is not performed.
- In the case where the sampling is performed synchronously with fuel injection, the sampling may be started slightly after the start of output of a drive signal for opening the injector 23 (at the elapse of at least a predetermined time following the start of the output).

Other technical ideas that can be understood from the foregoing embodiments will be described with their advantages.
(A) In the fuel injection control apparatus described in claim 1, the sampling means performs the sampling for computing the pressure of fuel for the fuel injection amount control substantially simultaneously with the start of output of a drive signal for opening the fuel injection valve.
   According to this construction, the sampling can be performed during an early period of the fuel injection period, so that the short injection-period can be efficiently used and many operations can be reliably executed.
(B) In the fuel injection control apparatus described in claim 1, the sampling means performs the sampling for computing the pressure of fuel for the fuel injection pressure control immediately after the end of fuel delivery performed by the fuel pump.
   According to this construction, taking advantage of the fact that the fuel pressure becomes substantially constant after the end of fuel delivery performed by the fuel pump, the sampling is performed immediately after the end of fuel delivery. Therefore, the fuel pressure can be converted into the fuel pressure for the injection pressure control with high precision.

While the invention has been described with reference to what are presently considered to be preferred embodiments thereof, it is to be understood that the invention is not limited to the disclosed embodiments or constructions. On the contrary, the invention is intended to cover various modifications and equivalent arrangements. In addition, while the various elements of the disclosed invention are shown in various combinations and configurations, which are exemplary, other combinations and configurations, including more, less or only a single embodiment, are also within the scope of the invention.

## Claims

1. A fuel injection control apparatus comprising:
sampling means (S101-S102, S203-S204) for detecting a pressure of a fuel delivered to a fuel injection valve (23) of an engine (11) as an analog signal, and for converting the analog signal into a digital signal;
injection amount control means for determining an injection period (τ1, τ2) based on a fuel injection amount in accordance with a state of operation of the engine (11) and a pressure of the fuel for an injection amount control which has been converted into a digital signal by the sampling means (S101-S102), and for controlling the fuel injection valve (23) so that the fuel is injected over the injection period (τ1, τ2); and
injection pressure control means for controlling the pressure of the fuel for an injection pressure control which has been converted into a digital signal by the sampling means (S203-S204) so that the pressure of the fuel for an injection pressure control converges to a target pressure set in accordance with the state of operation of the engine (11),
**characterized in that** the sampling means (S101-S102, S203-S204) performs a sampling (S101-S102) for computing the pressure of the fuel for the injection amount control and a sampling (S203-S204) for computing the pressure of the fuel for the injection pressure control at different timings.

2. The fuel injection control apparatus according to claim 1, **characterized in that**
the sampling means (S101-S102) performs the sampling for computing the pressure of the fuel for the injection amount control synchronously with a fuel injection from the fuel injection valve (23).

3. The fuel injection control apparatus according to claim 1, **characterized in that**
the sampling means (S101-S102) performs the sampling for computing the pressure of the fuel for the injection amount control with a delay from a fuel injection from the fuel injection valve (23).

4. The fuel injection control apparatus according to any of claims 1 to 3, **characterized in that**
the sampling means (S203-S204) performs the sampling for computing the pressure of the fuel for the injection pressure control at a timing when the pressure of the fuel is stable.

5. The fuel injection control apparatus according to any of claims 1 to 3, **characterized in:**
**that** the sampling means (S203-S204) performs the sampling for computing the pressure of the fuel for the injection pressure control synchronously with a rotational angle of an output shaft (16) of the engine (11).

6. The fuel injection control apparatus according to any of claims 1 to 3, **characterized by** further comprising:
a rotational angle sensor (44) for measuring a rotational angle of an output shaft (16) of the engine (11);
a cylinder discrimination sensor (45) for discriminating a control-object cylinder,
wherein the sampling means (S203, S204) performs the sampling for computing the pressure of the fuel for the injection pressure control if the rotational angle sensor (44) measures a predetermined rotational angle of the output shaft (16) and if the cylinder discrimination sensor (45) discriminates a predetermined control-object cylinder.

7. The fuel injection control apparatus according to any of claims 1 to 6, **characterized in that** the injection amount control means further comprises injection end time computing means (S101-S104) for computing a period during which the fuel injection valve (23) is operated based on the pressure computed by the sampling means (S101-S102).

8. The fuel injection control apparatus according to claim 7, **characterized in that** the injection end time computing means (S101-S104) performs a correction based on a cooling water temperature of the engine (11).

9. The fuel injection control apparatus according to any of claims 1 to 8, **characterized in that** the injection amount control means and the injection pressure control means are formed by a computer (54) provided in an electronic control unit (52), and that, of the sampling means (S101-S102, S203, S204), a portion (S102) for performing a conversion from the analog signal into the digital signal for computing the pressure of the fuel for the injection amount control is formed by an analog/digital converter (55) provided in the computer (54).

10. The fuel injection control apparatus according to any of claims 1 to 9, **characterized in that** the sampling (S101-S102) for computing the pressure of the fuel for the injection amount control is performed separately for a pilot injection and a main injection.

11. The fuel injection control apparatus according to any of claims 1 to 10, **characterized in:**
**that** a fuel pump (27) is drivingly connectable to an output shaft (16) of the engine (11), and is operable upon a rotation of the output shaft (16) to pressurize and deliver the fuel to the fuel injection valve (23).

12. A control method of a fuel injection control apparatus, comprising:
sampling a pressure of a fuel delivered to a fuel injection valve (23) of an engine (11) by detecting the pressure as an analog signal and by converting the detected pressure into a digital signal;
determining an injection period (τ1, τ2) based on a fuel injection amount in accordance with a state of operation of the engine (11) and a pressure of the fuel for an injection amount control which has been converted into the digital signal, and controlling the fuel injection valve (23) so that the fuel is injected over the injection period (τ1, τ2); and
controlling the pressure of the fuel for an injection pressure control which has been converted into the digital signal so that the pressure of the fuel for an injection pressure control converges to a target pressure set in accordance with the state of operation of the engine (11),
**characterized in that** a sampling (S101-S102) for computing the pressure of the fuel for the injection amount control and a sampling (S203, S204) for computing the pressure of the fuel for the injection pressure control are performed at different timings.

13. The control method of the fuel injection control apparatus according to claim 12, **characterized in that** the sampling (S101-S102) for computing the pressure of the fuel for the injection amount control is performed synchronously with a fuel injection from the fuel injection valve (23.).

14. The control method of the fuel injection control apparatus according to claim 12, **characterized in that** the sampling (S101-S102) for computing the pressure of the fuel for the injection amount control is performed with a delay from a fuel injection from the fuel injection valve (23).

15. The control method of the fuel injection control apparatus according to any of claims 12 to 14,
**characterized in that** the sampling (S203, S204) for computing the pressure of the fuel for the injection pressure control is performed at a timing when the pressure of the fuel is stable.

16. The control method of the fuel injection control apparatus according to any of claims 12 to 14, further
**characterized in:**
**that** the sampling (S203, S204) for computing the pressure of the fuel for the injection pressure control is performed synchronously with a rotational angle of an output shaft (16) of the engine (11).

17. The control method of the fuel injection control apparatus according to any of claims 12 to 14,
**characterized in that**
the sampling (S203, S204) for computing the pressure of the fuel for the injection pressure control is performed after a predetermined rotational angle of an output shaft (16) of the engine (11) is measured and after a predetermined control-object cylinder is discriminated.

18. The control method of the fuel injection control apparatus according to any of claims 12 to 17,
**characterized in that** in the injection amount control, a period (τ1, τ2) during which the fuel infection valve (23) is operated is computed based on the pressure of the fuel computed by the sampling (S101-S102).

19. The control method of the fuel injection control apparatus according to claim 18, **characterized in that** the period (τ1, τ2) of operation of the fuel injection valve (23) is corrected based on a cooling water temperature of the engine (11).

20. The control method of the fuel injection control apparatus according to any of claims 12 to 19,
**characterized in that** the injection amount control means and the injection pressure control means are formed by a computer (54) provided in an electronic control unit (52), and that, of the sampling means (S101-S102, S203, S204), a portion (S102) for performing a conversion from the analog signal into the digital signal for computing the pressure of the fuel for the injection amount control is formed by an analog/digital converter (55) provided in the computer (54).

21. The control method of the fuel injection control apparatus according to any of claims 12 to 20,
**characterized in that** the sampling (S101-S102) for computing the pressure of the fuel for the injection amount control is performed separately for a pilot injection and a main injection.

22. The control method of the fuel injection control apparatus according to any of claims 12 to 21,
**characterized in that** that a fuel pump (27) is drivingly connectable to an output shaft (16) of the engine (11), and is operable upon a rotation of the output shaft (16) to pressurize and deliver the fuel-to the-fuel injection valve (23).

## Patentansprüche

1. Eine Kraftstoffeinspritzeinrichtung, die Folgendes umfasst:
eine Abtastvorrichtung (S101 - S102, S203 - S204) zum Erkennen eines Drucks eines Kraftstoffs, der einem Kraftstoffeinspritzventil (23) eines Motors (11) zugeführt wird, als ein analoges Signal, und zum Konvertieren des analogen Signals in ein digitales Signal;
eine Einspritzmengen-Steuervorrichtung zum Bestimmen eines Einspritzzeitraums (τ1, τ2) auf der Basis einer Kraftstoff-Einspritzmenge in Übereinstimmung mit einem Betriebszustand des Motors (11) und einem Druck des Kraftstoffs für eine Einspritzmengensteuerung, der in ein digitales Signal durch die Abtastvorrichtung (S101-S102) konvertiert worden ist, und zum Steuern des Kraftstoffeinspritzventils (23), so dass der Kraftstoff über den Einspritzzeitraum (τ1, τ2) hinweg eingespritzt wird; und
eine Einspritzdruck-Steuervorrichtung zum Steuern des Drucks des Kraftstoffs für eine Einspritzdruck-Steuerung, der in ein digitales Signal durch die Abtastvorrichtung (S203 - S204) konvertiert worden ist, so dass der Druck des Kraftstoffs für eine Einspritzdruck-Steuerung zu einem Zieldruck konvergiert, der in Übereinstimmung mit dem Betriebszustand des Motors (11) gesetzt wird,
**dadurch gekennzeichnet, dass**
die Abtastvorrichtung (S101 - S102, S203 - S204) eine Abtastung (S101 - S102) zum Berechnen des Drucks des Kraftstoffs für die Einspritzmengensteuerung und eine Abtastung (S203 - S204) zum Berechnen des Drucks des Kraftstoffs für die Einspritzdruck-Steuerung zu unterschiedlichen Zeitpunkten durchführt.

2. Die Kraftstoffeinspritzeinrichtung gemäß Anspruch 1,
**dadurch gekennzeichnet, dass**
die Abtastvorrichtung (S101 - S102) die Abtastung zum Berechnen des Drucks des Kraftstoffs für die Einspritzmengensteuerung synchron mit einer Kraftstoffeinspritzung von dem Kraftstoffeinspritzventil (23) durchführt.

3. Die Kraftstoffeinspritzeinrichtung gemäß Anspruch 1,
**dadurch gekennzeichnet, dass**
die Abtastvorrichtung (S101 - S102) die Abtastung zum Berechnen des Drucks des Kraftstoffs für die Einspritzmengensteuerung mit einer Verzögerung von einer Kraftstoffeinspritzung von dem Kraftstoffeinspritzventil (23) durchführt.

4. Die Kraftstoffeinspritzeinrichtung gemäß irgendeinem der Ansprüche 1 bis 3,
**dadurch gekennzeichnet, dass**
die Abtastvorrichtung (S203 - S204) die Abtastung zum Berechnen des Drucks des Kraftstoffs für die Einspritzdruck-Steuerung zu einem Zeitpunkt durchführt, zu dem der Druck des Kraftstoffs stabil ist.

5. Die Kraftstoffeinspritzeinrichtung gemäß irgendeinem der Ansprüche 1 bis 3,
**dadurch gekennzeichnet, dass**
die Abtastvorrichtung (S203 - S204) die Abtastung zum Berechnen des Drucks des Kraftstoffs für die Einspritzdruck-Steuerung synchron zu einem Rotationswinkel einer Ausgangswelle (16) des Motors (11) durchführt.

6. Die Kraftstoffeinspritzeinrichtung gemäß irgendeinem der Ansprüche 1 bis 3,
**dadurch gekennzeichnet, dass**
sie darüber hinaus Folgendes umfasst:
einen Rotationswinkelsensor (44) zum Messen eines Rotationswinkels einer Ausgangswelle (16) des Motors (11);
einen Zylinderunterscheidungssensor (45) zum Unterscheiden eines Steuerungsobjekt-Zylinders,
wobei die Abtastvorrichtung (S203, S204) die Abtastung zum Berechnen des Drucks des Kraftstoffs für die Einspritzdruck-Steuerung durchführt, wenn der Rotationswinkelsensor (44) einen vorherbestimmten Rotationswinkel der Ausgangswelle (16) misst, und wenn der Zylinderunterscheidungssensor (45) einen vorherbestimmten Steuerungsobjekt-Zylinder unterscheidet.

7. Die Kraftstoffeinspritzeinrichtung gemäß irgendeinem der Ansprüche 1 bis 6,
**dadurch gekennzeichnet, dass**
die Einspritzmengen-Steuervorrichtung darüber hinaus eine Einspritzende-Zeitberechnungsvorrichtung (S101 - S104) zum Berechnen eines Zeitraums umfasst, während dem das Kraftstoffeinspritzventil (23) auf der Basis des Drucks, der durch die Abtastvorrichtung (S101 - S102) berechnet worden ist, betrieben wird.

8. Die Kraftstoffeinspritzeinrichtung gemäß Anspruch 7,
**dadurch gekennzeichnet, dass**
die Einspritzende-Zeitberechnungsvorrichtung (S101 - S104) eine Korrektur auf der Basis einer Kühlwassertemperatur des Motors (11) durchführt.

9. Die Kraftstoffeinspritzeinrichtung gemäß irgendeinem der Ansprüche 1 bis 8,
**dadurch gekennzeichnet, dass**
die Einspritzmengen-Steuervorrichtung und die Einspritzdruck-Steuervorrichtung durch einen Computer (54) gebildet werden, der in einem elektronischen Steuergerät (52) vorgesehen ist, und dass von der Abtastvorrichtung (S101 - S102, S203, S204) ein Bereich (S102) zum Durchführen einer Konvertierung vom analogen Signal in das digitale Signal zum Berechnen des Drucks des Kraftstoffs für die Einspritzmengensteuerung durch einen Analog/Digital-Wandler (55) geformt ist, der in dem Computer (54) vorgesehen ist.

10. Die Kraftstoffeinspritzeinrichtung gemäß irgendeinem der Ansprüche 1 bis 9,
**dadurch gekennzeichnet, dass**
die Abtastung (S101 - S102) zum Berechnen des Drucks des Kraftstoffs für die Einspritzmengensteuerung separat für eine Piloteinspritzung und eine Haupteinspritzung durchgeführt wird.

11. Die Kraftstoffeinspritzeinrichtung gemäß irgendeinem der Ansprüche 1 bis 10,
**dadurch gekennzeichnet, dass**
eine Kraftstoffpumpe (27) antreibbar an eine Ausgangswelle (16) des Motors (11) angeschlossen werden kann und bei einer Rotation der Ausgangswelle (16) in der Lage ist, den Kraftstoff mit Druck zu beaufschlagen und dem Kraftstoffeinspritzventil (23) zuzuführen.

12. Ein Steuerungsverfahren einer Kraftstoffeinspritzeinrichtung, das Folgendes umfasst:
Abtasten eines Drucks eines Kraftstoffs, der einem Kraftstoffeinspritzventil (23) eines Motors (11) zugeführt wird, indem der Druck als ein analoges Signal erkannt und der erkannte Druck in ein digitales Signal konvertiert wird;
Festlegen eines Einspritzzeitraums (τ1, τ2) auf der Basis einer Kraftstoff-Einspritzmenge in Übereinstimmung mit einem Betriebszustand des Motors (11) und einem Druck des Kraftstoffs für eine Einspritzmengensteuerung, der in das digitale Signal konvertiert worden ist, und Steuern des Kraftstoffeinspritzventils (23) dergestalt, dass der Kraftstoff über den Einspritzzeitraum (τ1, τ2) eingespritzt wird; und
Steuern des Drucks des Kraftstoffs für eine Einspritzdruck-Steuerung, der in das digitale Signal konvertiert worden ist, so dass der Druck des Kraftstoffs für eine Einspritzdruck-Steuerung zu einem Zieldruck konvergiert, der in Übereinstimmung mit dem Betriebszustand des Motors (11) gesetzt wird,
**dadurch gekennzeichnet, dass**
eine Abtastung (S101 - S102) zum Berechnen des Drucks des Kraftstoffs für die Einspritzmengensteuerung und eine Abtastung (S203, S204) zum Berechnen des Drucks des Kraftstoffs für die Einspritzdruck-Steuerung zu unterschiedlichen Zeitpunkten durchgeführt werden.

13. Das Steuerungsverfahren der Kraftstoffeinspritzeinrichtung gemäß Anspruch 12,
**dadurch gekennzeichnet, dass**
die Abtastung (S101 - S102) zum Berechnen des Drucks des Kraftstoffs für die Einspritzmengensteuerung synchron mit einer Kraftstoffeinspritzung von dem Kraftstoffeinspritzventil (23) durchgeführt wird.

14. Das Steuerungsverfahren der Kraftstoffeinspritzeinrichtung gemäß Anspruch 12,
**dadurch gekennzeichnet, dass**
die Abtastung (S101 - S102) zum Berechnen des Drucks des Kraftstoffs für die Einspritzmengensteuerung mit einer Verzögerung von einer Kraftstoffeinspritzung von dem Kraftstoffeinspritzventil (23) durchgeführt wird.

15. Das Steuerungsverfahren der Kraftstoffeinspritzeinrichtung gemäß irgendeinem der Ansprüche 12 bis 14,
**dadurch gekennzeichnet, dass**
die Abtastung (S203, S204) zum Berechnen des Drucks des Kraftstoffs für die Einspritzdruck-Steuerung zu einem Zeitpunkt durchgeführt wird, zu dem der Druck des Kraftstoffs stabil ist.

16. Das Steuerungsverfahren der Kraftstoffeinspritzeinrichtung gemäß irgendeinem der Ansprüche 12 bis 14, darüber hinaus
**dadurch gekennzeichnet, dass**
die Abtastung (S203, S204) zum Berechnen des Drucks des Kraftstoffs für die Einspritzdruck-Steuerung synchron mit einem Rotationswinkel einer Ausgangswelle (16) des Motors (11) durchgeführt wird.

17. Das Steuerungsverfahren der Kraftstoffeinspritzeinrichtung gemäß irgendeinem der Ansprüche 12 bis 14,
**dadurch gekennzeichnet, dass**
die Abtastung (S203, S204) zum Berechnen des Drucks des Kraftstoffs für die Einspritzdruck-Steuerung durchgeführt wird, nachdem ein vorherbestimmter Rotationswinkel einer Ausgangswelle (16) des Motors (11) gemessen worden ist und nachdem ein vorherbestimmter Steuerungsobjekt-Zylinder unterschieden worden ist.

18. Das Steuerungsverfahren der Kraftstoffeinspritzeinrichtung gemäß irgendeinem der Ansprüche 12 bis 17,
**dadurch gekennzeichnet, dass**
in der Einspritzmengensteuerung ein Zeitraum (τ1, τ2), während dem das Kraftstoffeinspritzventil (23) betrieben wird, auf der Basis des Drucks des Kraftstoffs berechnet wird, der durch die Abtastung (S101 - S102) berechnet wurde.

19. Das Steuerungsverfahren der Kraftstoffeinspritzeinrichtung gemäß Anspruch 18,
**dadurch gekennzeichnet, dass**
der Zeitraum (τ1, τ2) des Betriebs des Kraftstoffeinspritzventils (23) auf der Basis einer Kühlwassertemperatur des Motors (11) korrigiert wird.

20. Das Steuerungsverfahren der Kraftstoffeinspritzeinrichtung gemäß irgendeinem der Ansprüche 12 bis 19,
**dadurch gekennzeichnet, dass**
die Einspritzmengen-Steuervorrichtung und die Einspritzdruck-Steuervorrichtung durch einen Computer (54) gebildet werden, der in einem elektronischen Steuergerät (52) vorgesehen ist, und dass von der Abtastvorrichtung (S101 - S102, S203, S204) ein Bereich (S102) zum Durchführen einer Konvertierung vom analogen Signal in das digitale Signal zum Berechnen des Drucks des Kraftstoffs für die Einspritzmengensteuerung durch einen Analog/Digital-Wandler (55) geformt ist, der in dem Computer (54) vorgesehen ist.

21. Das Steuerungsverfahren der Kraftstoffeinspritzeinrichtung gemäß irgendeinem der Ansprüche 12 bis 20,
**dadurch gekennzeichnet, dass**
die Abtastung (S101 - S102) zum Berechnen des Drucks des Kraftstoffs für die Einspritzmengensteuerung separat für eine Piloteinspritzung und eine Haupteinspritzung durchgeführt wird.

22. Das Steuerungsverfahren der Kraftstoffeinspritzeinrichtung gemäß irgendeinem der Ansprüche 12 bis 21,
**dadurch gekennzeichnet, dass**
eine Kraftstoffpumpe (27) antreibbar an eine Ausgangswelle (16) des Motors (11) angeschlossen werden kann und bei einer Rotation der Ausgangswelle (16) in der Lage ist, den Kraftstoff mit Druck zu beaufschlagen und dem Kraftstoffeinspritzventil (23) zuzuführen.

## Revendications

1. Appareil de commande d'injection de carburant comprenant :
un moyen d'échantillonnage (S101-S102, S203-S204) destiné à détecter une pression d'un carburant délivré vers une soupape d'injection de carburant (23) d'un moteur (11) en tant que signal analogique, et destiné à convertir le signal analogique en un signal numérique ;
un moyen de commande de quantité d'injection destiné à déterminer une période d'injection (τ1, τ2) en se basant sur une quantité d'injection de carburant conformément à un état de fonctionnement du moteur (11) et à une pression du carburant pour une commande de quantité d'injection qui a été convertie en un signal numérique par le moyen d'échantillonnage (S101-S102), et destiné à commander la soupape d'injection de carburant (23) de sorte que le carburant est injecté sur la période d'injection (τ1, τ2) ; et
un moyen de commande de pression d'injection destiné à commander la pression de carburant pour une commande de pression d'injection qui a été convertie en un signal numérique par le moyen d'échantillonnage (S203-S204) de sorte que la pression du carburant pour une commande de pression d'injection convergeant vers une pression cible établie conformément à l'état de fonctionnement du moteur (11),
**caractérisé en ce que** le moyen d'échantillonnage (S101-S102, S203-S204) réalise un échantillonnage (S101-S102) destiné à calculer la pression du carburant pour la commande de quantité d'injection et un échantillonnage (S203-S204) destiné à calculer la pression du carburant pour la commande de pression d'injection à des calages différents.

2. Appareil de commande d'injection de carburant selon la revendication 1, **caractérisé en ce que**
le moyen d'échantillonnage (S101-S102) réalise l'échantillonnage destiné à calculer la pression du carburant pour la commande de quantité d'injection en synchronisme avec une injection de carburant depuis la soupape d'injection de carburant (23).

3. Appareil de commande d'injection de carburant selon la revendication 1, **caractérisé en ce que**
le moyen d'échantillonnage (S101-S102) réalise l'échantillonnage destiné à calculer la pression du carburant pour la commande de quantité d'injection avec un retard d'une injection de carburant depuis la soupape d'injection de carburant (23).

4. Appareil de commande d'injection de carburant selon l'une quelconque des revendications 1 à 3,
**caractérisé en ce que**
le moyen d'échantillonnage (S203-S204) réalise l'échantillonnage destiné à calculer la pression du carburant pour la commande de pression d'injection à un moment auquel la pression du carburant est stable.

5. Appareil de commande d'injection de carburant selon l'une quelconque des revendications 1 à 3,
**caractérisé en ce que** :
le moyen d'échantillonnage (S203-S204) réalise l'échantillonnage destiné à calculer la pression du carburant pour la commande de pression d'injection de manière asynchrone avec un angle de rotation d'un arbre de sortie (16) du moteur (11) .

6. Appareil de commande d'injection de carburant selon l'une quelconque des revendications 1 à 3,
**caractérisé en ce qu'**il comprend de plus :
un capteur d'angle de rotation (44) destiné à mesurer un angle de rotation d'un arbre de sortie (16) du moteur (11) ;
un capteur de discrimination de cylindre (45) destiné à discriminer un cylindre visé par la commande,
dans lequel le moyen d'échantillonnage (S203, S204) réalise l'échantillonnage destiné à calculer la pression du carburant pour la commande de pression d'injection si le capteur d'angle de rotation (44) mesure un angle de rotation prédéterminé de l'arbre de sortie (16) et si le capteur de discrimination de cylindre (45) discrimine un cylindre prédéterminé visé par la commande.

7. Appareil de commande d'injection de carburant selon l'une quelconque des revendications 1 à 6,
**caractérisé en ce que** le moyen de commande de quantité d'injection comprend de plus un moyen de calcul de moment de fin d'injection (S101 à S104) destiné à calculer une période pendant laquelle la soupape d'injection de carburant (23) est actionnée en se basant sur la pression calculée par le moyen d'échantillonnage (S101-S102).

8. Appareil de commande d'injection de carburant selon la revendication 7, **caractérisé en ce que** le moyen de calcul du moment de fin d'injection (S101 à S104) réalise une correction en se basant sur une température de l'eau de refroidissement du moteur (11).

9. Appareil de commande d'injection de carburant selon l'une quelconque des revendications 1 à 8,
**caractérisé en ce que** le moyen de commande de quantité d'injection et le moyen de commande de pression d'injection sont formés par un ordinateur (54) prévu dans une unité de commande électronique (52), et **en ce qu'**une partie (S102) du moyen d'échantillonnage (S101-S102, S203, S204), destinée à réaliser une conversion du signal analogique en un signal numérique pour calculer la pression du carburant pour la commande de quantité d'injection, est formée par un convertisseur analogique/numérique (55) prévu dans l'ordinateur (54).

10. Appareil de commande d'injection de carburant selon l'une quelconque des revendications 1 à 9,
**caractérisé en ce que** l'échantillonnage (S101-S102) destiné à calculer la pression du carburant pour la commande de quantité d'injection est réalisé séparément pour une injection pilote et une injection principale.

11. Appareil de commande d'injection de carburant selon l'une quelconque des revendications 1 à 10,
**caractérisé en ce que** :
une pompe à carburant (27) est raccordée en entraînement à un arbre de sortie (16) du moteur (11), et peut être actionnée sur rotation de l'arbre de sortie (16) pour mettre sous pression et délivrer le carburant vers la soupape d'injection de carburant (23).

12. Procédé de commande d'un appareil de commande d'injection de carburant, comprenant les étapes consistant à :
échantillonner une pression d'un carburant délivré vers une soupape d'injection de carburant (23) d'un moteur (11) en détectant la pression en tant que signal analogique et en convertissant la pression détectée en un signal numérique ;
déterminer une période d'injection (τ1, τ2) en se basant sur une quantité d'injection de carburant conformément à un état de fonctionnement du moteur (11) et une pression du carburant pour une commande de quantité d'injection qui a été convertie en un signal numérique, et commander la soupape d'injection de carburant (23) de sorte que le carburant est injecté sur la période d'injection (τ1, τ2) ; et
commander la pression du carburant pour une commande de pression d'injection qui a été convertie en signal numérique de sorte que la pression du carburant pour une commande de pression d'injection converge vers une pression cible établie conformément à l'état de fonctionnement du moteur (11),
**caractérisé en ce qu'**un échantillonnage (S101-S102) destiné à calculer la pression du carburant pour la commande de quantité d'injection et **en ce qu'**un échantillonnage (S203, S204) destiné à calculer la pression du carburant pour la commande de pression d'injection sont réalisés à différents moments.

13. Procédé de commande de l'appareil de commande d'injection de carburant selon la revendication 12,
**caractérisé en ce que** l'échantillonnage (S101-S102) destiné à calculer la pression du carburant pour la commande de quantité d'injection est réalisé en synchronisme avec l'injection du carburant depuis la soupape d'injection de carburant (23).

14. Procédé de commande de l'appareil de commande d'injection de carburant selon la revendication 12,
**caractérisé en ce que** l'échantillonnage (S101-S102) destiné à calculer la pression du carburant pour la commande de quantité d'injection est réalisé avec un retard d'une injection de carburant depuis la soupape d'injection de carburant (23).

15. Procédé de commande de l'appareil de commande d'injection de carburant selon l'une quelconque des revendications 12 à 14, **caractérisé en ce que** l'échantillonnage (S203, S204) destiné à calculer la pression du carburant pour la commande de pression d'injection est réalisé à un moment auquel la pression du carburant est stable.

16. Procédé de commande de l'appareil de commande d'injection de carburant selon l'une quelconque des revendications 12 à 14, **caractérisé de plus en ce que** :
l'échantillonnage (S203, S204) destiné à calculer la pression du carburant pour la commande de pression d'injection est réalisé de manière asynchrone avec un angle de rotation d'un arbre de sortie (16) du moteur (11).

17. Procédé de commande de l'appareil de commande d'injection de carburant selon l'une quelconque des revendications 12 à 14, **caractérisé en ce que**
l'échantillonnage (S203, S204) destiné à calculer la pression du carburant pour la commande de pression d'injection est réalisé après qu'un angle de rotation prédéterminé de l'arbre de sortie (16) du moteur (11) ait été mesuré, et après qu'un cylindre prédéterminé visé par la commande ait été discriminé.

18. Procédé de commande de l'appareil de commande d'injection de carburant selon l'une quelconque des revendications 12 à 17, **caractérisé en ce que** pendant la commande de quantité d'injection, une période (τ1, τ2) pendant laquelle la soupape d'injection de carburant (23) est actionnée est calculée en se basant sur la pression du carburant calculée par l'échantillonnage (S101-S102).

19. Procédé de commande de l'appareil de commande d'injection de carburant selon la revendication 18,
**caractérisé en ce que** la période (τ1, τ2) d'actionnement de la soupape d'injection de carburant (23) est corrigée en se basant sur une température de l'eau de refroidissement du moteur (11).

20. Procédé de commande de l'appareil de commande d'injection de carburant selon l'une quelconque des revendications 12 à 19, **caractérisé en ce que** le moyen de commande de quantité d'injection et **en ce que** le moyen de commande de pression d'injection sont formés par un ordinateur (54) prévu dans une unité de commande électronique (52), et **en ce qu'**une partie (S102) du moyen d'échantillonnage (S101-S102, S203, S204), destinée à réaliser une conversion du signal analogique en signal numérique pour calculer la pression du carburant pour la commande d'un quantité d'injection, est formée d'un convertisseur analogique/numérique (55) prévu dans l'ordinateur (54).

21. Procédé de commande de l'appareil de commande d'injection de carburant selon l'une quelconque des revendications 12 à 20, **caractérisé en ce que** l'échantillonnage (S101-S102) destiné à calculer la pression du carburant pour la commande de quantité d'injection est réalisé séparément pour une injection pilote et pour une injection principale.

22. Procédé de commande de l'appareil de commande d'injection de carburant selon l'une quelconque des revendications 12 à 21, **caractérisé en ce qu'**une pompe à carburant (27) peut être raccordée en entraînement à un arbre de sortie (16) du moteur (11), et pouvant être actionnée sur rotation de l'arbre de sortie (16) pour mettre sous pression et délivrer le carburant vers la soupape d'injection de carburant (23).
